(19) Europäisches Patentamt
European Patent Office
Office européen des brevets

(11) **EP 1 814 693 B1**

(12) **FASCICULE DE BREVET EUROPEEN**

(45) Date de publication et mention
de la délivrance du brevet:
**27.03.2013 Bulletin 2013/13**

(21) Numéro de dépôt: **05798350.4**

(22) Date de dépôt: **11.08.2005**

(51) Int Cl.:
**B24B 9/14** $^{(2006.01)}$      **G01B 5/20** $^{(2006.01)}$

(86) Numéro de dépôt international:
**PCT/FR2005/002077**

(87) Numéro de publication internationale:
**WO 2006/042918 (27.04.2006 Gazette 2006/17)**

(54) **DISPOSITIF ET PROCÉDÉ D'ACQUISITION DE CARACTÉRISTIQUES GÉOMÉTRIQUES D'UNE MONTURE DE LUNETTES**

VORRICHTUNG UND VERFAHREN ZUM ERHALT VON GEOMETRISCHEN MERKMALEN EINES BRILLENGESTELLS

DEVICE AND METHOD FOR ACQUIRING GEOMETRICAL CHARACTERISTICS OF A GLASSES FRAME

(84) Etats contractants désignés:
**DE ES FR**

(30) Priorité: **15.10.2004 FR 0410969**

(43) Date de publication de la demande:
**08.08.2007 Bulletin 2007/32**

(73) Titulaire: **LUNEAU TECHNOLOGY OPERATIONS**
**27340 Pont de l'Arche (FR)**

(72) Inventeur: **BOZZETTO, Olivier**
**F-27340 PONT DE L'ARCHE (FR)**

(74) Mandataire: **Blot, Philippe Robert Emile et al**
**Cabinet Lavoix**
**2, place d'Estienne d'Orves**
**75441 Paris Cedex 09 (FR)**

(56) Documents cités:
**FR-A- 2 659 440        FR-A- 2 728 965**
**US-A1- 2002 046 000**

EP 1 814 693 B1

## Description

La présente invention est relative à un dispositif d'acquisition de caractéristiques géométriques d'une monture de lunettes, comprenant une partie de référence fixe, un palpeur de mesure d'un contour intérieur de la monture, mobile par rapport à la partie de référence, et des moyens d'estimation de l'épaisseur de la monture.

L'invention vise également un procédé d'acquisition de caractéristiques géométriques d'une monture de lunettes dans un tel dispositif.

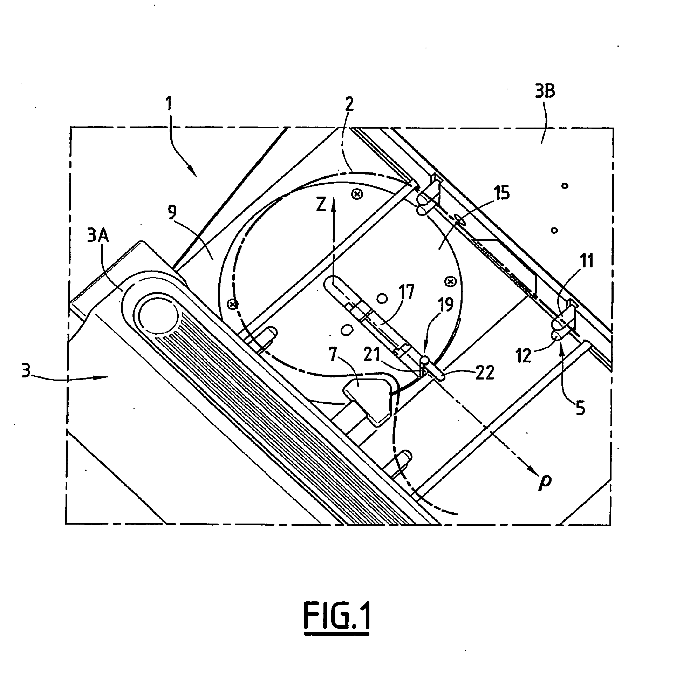

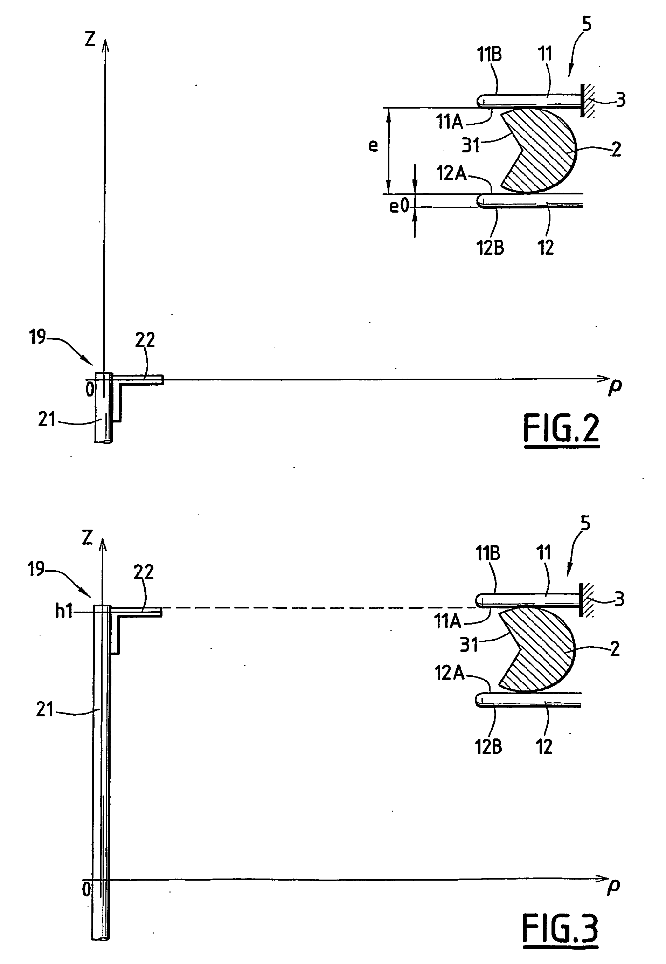

Le contexte et le problème de base de l'invention seront tout d'abord expliqués en regard des Figures 1 et 2 des dessins annexés.

La Figure 1 représente schématiquement et partiellement en perspective de dessus, un dispositif 1 du type visé par l'invention, dans lequel est placée une monture de lunettes, représentée schématiquement en traits mixtes sous la référence 2, et dont le contour est à mesurer.

Le dispositif 1 comprend une partie de référence 3 sur laquelle sont agencées deux paires de pinces 5 en vis-à-vis, ainsi qu'une cale de centrale (ou « faux-nez ») 7. Les pinces 5 et la cale 7 sont prévues pour maintenir la monture 2 en position fixe par rapport à la partie 3, et pour s'adapter à différentes formes de montures. Afin de s'adapter à différentes largeurs de monture, la partie 3 est en réalité formée de deux équipages opposés 3A, 3B, montés coulissants horizontalement sur un bâti de l'appareil, de sorte que l'écartement entre deux pinces en vis-à-vis peut être réglé.

Après montage d'une monture dans le dispositif et réglage de l'écartement des deux équipages coulissants 3A, 3B, ces derniers sont bloqués en position. La partie 3 reste alors fixe par rapport au bâti de l'appareil, auquel elle pourra être assimilée.

Dans certains dispositifs analogues, il n'est pas prévu de cale et le maintien de la monture est assuré uniquement par les pinces.

Le bâti comporte une table de mesure 9 prévue pour être horizontale en fonctionnement, au-dessus de laquelle est maintenue la monture 2 essentiellement à plat, au moyen de la partie 3, des pinces 5 et, éventuellement, de la cale 7.

Chaque pince 5 est formée d'une paire d'organes de serrage 11, 12, dont le premier est une branche supérieure 11 fixe en hauteur, et le deuxième une branche inférieure 12 mobile en hauteur. Les deux branches sont parallèles et ont leurs extrémités libres tournées vers la pince 5 opposée, c'est-à-dire vers l'intérieur de la monture.

Le dispositif 1 comporte en outre une tourelle 15 de mesure montée rotative sur la table 9, et pourvue d'une rainure radiale 17. La tourelle est dotée d'un palpeur 19, comprenant une tige verticale 21 engagée dans la rainure 17 et une pointe de contact 22 sensiblement horizontale. La pointe 22 est solidaire de la tige 21, et tournée radialement vers l'extérieur.

A la tourelle 15 est lié un système d'axes Z, p, dans lequel :

- Z est l'axe de rotation de la tourelle 15 perpendiculaire à la table 9, supposé vertical ; et
- p est l'axe radial correspondant à l'axe de la rainure 17, tournant avec la tourelle autour de l'axe Z.

Le palpeur 19 est mobile en rotation par rapport au bâti 3 avec la tourelle 15, et susceptible de déplacements radiaux dans la rainure 17 et verticaux.

Le dispositif 1 est doté de moyens (non représentés) d'entraînement en rotation de la tourelle 15, et de moyens (non représentés) d'entraînement du palpeur 19, permettant de déplacer le palpeur radialement dans la rainure 17 et de déplacer le palpeur verticalement. Le dispositif 1 comprend en outre des moyens (non représentés) d'enregistrement des déplacements du palpeur 19.

Par ailleurs, le dispositif 1 comprend des moyens, motorisés ou non, pour serrer les branches 11, 12 des pinces 5 après engagement de la monture à mesurer.

Sur la Figure 2, on a représenté schématiquement, dans un plan vertical radial passant par une pince 5, la section courante d'un cercle de monture 2, et la partie supérieure du palpeur 19 dans une position de référence escamotée dans la tourelle 15. Sur cette Figure, on a porté l'axe horizontal radial p, et l'axe vertical Z.

Comme on le voit sur cette Figure, le cercle de monture comporte sur son pourtour intérieur une gorge ou drageoir 31 en V. La section courante du cercle de monture 2, dont en particulier le profil du drageoir 31, est symétrique par rapport au plan médian horizontal.

Chacune des branches 11, 12 de la pince 5 comprend une face interne de serrage 11A, 12A, et une face externe 11B, 12B.

L'épaisseur _e_ de la monture 2 qui est serrée entre les faces internes de serrage 11A, 12A des deux branches est égale à l'écartement des deux branches 11, 12, c'est-à-dire à la distance entre les deux faces internes de serrage 11A, 12A.

Pour réaliser avec une grande précision l'acquisition des données de forme du contour intérieur de la monture, au fond du drageoir 31, il est nécessaire d'engager la pointe de contact 22 du palpeur dans le fond du drageoir 31 avant mise en rotation de la tourelle 15. A cet effet, il est nécessaire de connaître avec précision l'épaisseur _e_ de la monture 2, de sorte que l'introduction de la pointe de contact 22 dans le drageoir 31 peut être réalisée à mi-épaisseur, c'est-à-dire à la hauteur du fond du drageoir 31.

Dans l'état de la technique, par exemple dans US 2002/046000, l'épaisseur $e$ de la monture est mesurée au moyen d'un capteur associé à la branche mobile 12 de la pince, ce capteur détectant les déplacements de la branche 12 sur l'axe vertical entre une position de référence et une position de serrage de la monture.

Ainsi, dans les dispositifs connus, la mesure de l'épaisseur de la monture implique la présence d'un capteur spécifique, qui est pénalisant du point de vue du coût de fabrication de l'appareil.

L'invention a pour objet de remédier à cet inconvénient, et de proposer un dispositif du type précédemment exposé, dans lequel le coût relatif à la fonction de mesure de l'épaisseur de la monture est sensiblement réduit voire supprimé.

A cet effet, dans un dispositif d'acquisition de caractéristiques géométriques d'une monture de lunettes du type précité, les moyens d'estimation de l'épaisseur comprennent le palpeur de mesure du contour,

Le dispositif selon la revendication 1 comporte au moins une paire d'organes de serrage de la monture, des moyens de mesure et d'enregistrement de la position d'un premier des organes de serrage, des moyens pour déplacer le palpeur dans une position de contact avec le deuxième organe de serrage, et des moyens d'enregistrement de la position de contact correspondant du palpeur, les moyens d'estimation étant adaptés pour estimer l'épaisseur de la monture à partir desdites positions enregistrées.

L'invention concerne également un procédé selon la revendication 2 et associé d'acquisition de caractéristiques géométriques d'une monture de lunettes, dans lequel on estime l'épaisseur de la monture au moyen du palpeur de mesure du contour.

Selon d'autres caractéristiques, optionnelles, du procédé selon l'invention :

- on estime l'épaisseur de la monture de la façon suivante :
- le premier organe de serrage étant un organe fixe, et le deuxième organe de serrage étant un organe mobile, on mesure et on enregistre la position du premier organe de serrage au cours d'une étape d'étalonnage préalable au serrage de la monture ;
- le premier organe de serrage étant un organe fixe supérieur ayant une face interne de serrage, et le deuxième organe de serrage étant un organe mobile inférieur ayant une face interne de serrage et une face externe distante d'une épaisseur prédéterminée $e_0$, la position pré-enregistrée du premier organe de serrage est la hauteur $h_1$ de référence de la face interne de l'organe fixe, et la position de contact du palpeur enregistrée ensuite est une position de contact sur la face externe de l'organe mobile, correspondant à une deuxième hauteur $h_2$, l'épaisseur $e$ de la monture étant estimée par la relation :

$$e = h_1 - h_2 - e_0 \; ;$$

- le cycle de déplacement du palpeur est réalisé à partir d'une position d'origine dégagée des organes de serrage et de la monture ; et
- au cours du cycle de déplacement du palpeur, on amène le palpeur en contact avec la monture ou avec une partie du dispositif radialement solidaire des organes de serrage afin d'estimer et d'enregistrer la position radiale de la monture.

Un exemple de mise en oeuvre de l'invention va maintenant être décrit en référence aux dessins annexés, sur lesquels, outre les Figures 1 et 2 explicitées précédemment, les Figures 3 à 7 sont des vues analogues à la Figure 2, correspondant à des positions successives du palpeur dans l'exécution d'un procédé conforme à l'invention, et ce à partir de la position d'origine illustrée sur la Figure 2.

On notera en premier lieu que, dans le dispositif et le procédé d'acquisition qui font l'objet de l'invention, l'estimation de l'épaisseur $e$ de la monture est réalisée au moyen du palpeur 19 (et des moyens d'enregistrement auxquels il est relié). Ainsi, les moyens d'estimation de l'épaisseur comprennent le palpeur 19 de mesure du contour de la monture.

On supposera connue l'épaisseur $e_0$ de la branche mobile 12, définie comme la distance entre sa face interne 12A et sa face externe 12B. Cette épaisseur $e_0$ peut être soit connue avec grande précision et pré-enregistrée dans l'appareil, soit être mesurée au cours d'une phase d'étalonnage de l'appareil et être enregistrée, la mesure pouvant s'effectuer au moyen du palpeur 19.

Dans une phase ou d'étalonnage de l'appareil, qui n'a pas été illustrée, et qui est réalisée préalablement au serrage de la monture 2 dans les pinces 5, on mesure et on enregistre la hauteur $h_1$ de la face interne 11A de la branche fixe 11.

Cette hauteur de référence $h_1$, appelée « hauteur offset introduction », est représentée sur la Figure 3. Elle peut être mesurée par des moyens extérieurs au dispositif, puis saisie, ou être mesurée par des moyens appartenant au dispositif, par exemple au moyen du palpeur, et encore, à titre d'exemple comme cela est décrit ci-après : la hauteur $h_1$ est assimilée à la hauteur du palpeur, définie comme la hauteur du plan horizontal médian de la pointe 22, telle que la surface ou l'arête supérieure horizontale de la pointe fait contact avec face interne horizontale de la branche fixe 11. Pour ce faire, on amène la surface supérieure de la pointe 22 en contact avec la face interne 11A de la branche fixe, et on enregistre la position du palpeur, de laquelle est déduite la hauteur $h_1$.

Le palpeur 19 est ensuite placé dans sa position d'origine, telle que représentée sur la Figure 2, c'est-à-dire sensiblement sur l'axe de rotation de la tourelle, à hauteur nulle. Cette position d'origine est dégagée des pinces 5 et de la monture 2. La phase d'initialisation est alors terminée.

Le cycle de déplacement du palpeur 19 pour la mesure de l'épaisseur e est réalisé à partir de cette position d'origine, les pinces 5 étant préalablement serrées sur la monture 2, comme illustré sur la Figure 2.

A partir de cette position d'origine, la pointe 22 du palpeur est amenée à la hauteur $h_1$ par déplacement vertical sur l'axe de rotation de la tourelle Z : cette position est illustrée sur la Figure 3.

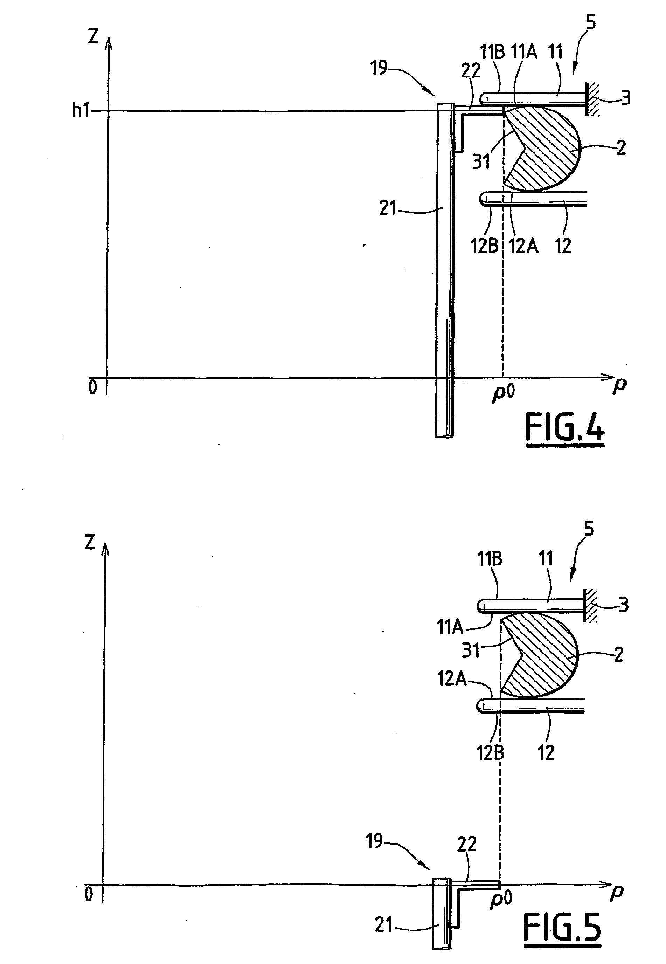

Dans une étape ultérieure du procédé, la pointe 22 est déplacée horizontalement, en restant à la hauteur $h_1$, jusqu'à venir en contact par son extrémité libre avec la monture 2, et simultanément par sa surface supérieure avec la face interne 11A de la branche fixe 11. Cette position du palpeur 19, représentée sur la Figure 4, définit une première position de contact et donne la position $\rho_0$ sur l'axe radial du bord interne du cercle de la monture 2. Cette information est enregistrée par le dispositif pour permettre d'estimer et d'enregistrer la position radiale de la monture, significative de sa largeur.

Cette prise d'information pourrait être réalisée à des hauteurs différentes de $h_1$, par exemple très légèrement inférieures, ou très légèrement supérieures (la position radiale de la monture devant alors être assimilée à celle de la pince).

Dans une étape ultérieure du procédé, le palpeur 19 est dégagé de la pince 5 et de la monture 2 par une translation radiale vers l'axe Z, puis déplacé verticalement par exemple jusqu'à la hauteur nulle. Le palpeur est alors déplacé à nouveau radialement, de façon horizontale, jusqu'à ce que l'extrémité libre de la pointe 22 soit replacée à la position $\rho_0$, à hauteur nulle. Cette position est représentée sur la Figure 5.

Le passage de la première position de contact représentée sur la Figure 4, à la position de la Figure 5, peut être réalisé via la position d'origine (identique à celle de la Figure 2) ou selon un autre chemin.

Dans une étape suivante, le palpeur 19 est déplacé verticalement jusqu'au contact de la pointe 22 sur la face externe 12B de la branche mobile 12.

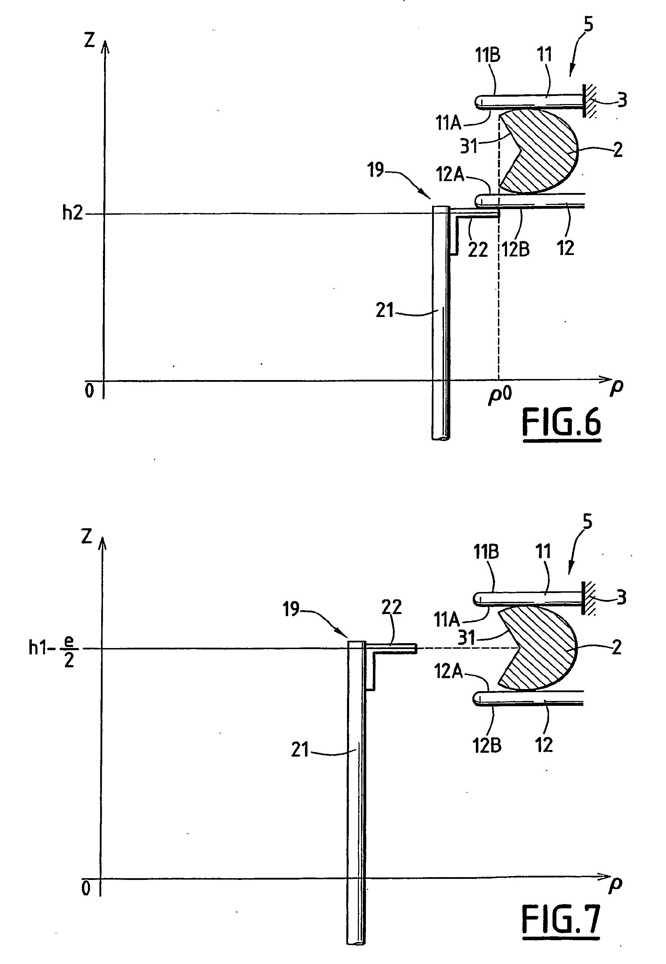

Cette position, représentée à la Figure 6, définit une deuxième position de contact du palpeur 19. La hauteur $h_2$ de la pointe 22 dans cette position est enregistrée par les moyens d'enregistrement associés au palpeur.

Dans une étape suivante du procédé, les moyens d'estimation réalisent l'estimation de l'épaisseur e de la monture par calcul, en appliquant la relation suivante :

$$e = h_1 - h_2 - e_0.$$

Après le cycle d'estimation de l'épaisseur e de la monture 2, tel que décrit précédemment, on poursuit le procédé d'acquisition des données géométriques de la monture par l'introduction du palpeur 19 en fond de drageoir 31, en vue de l'acquisition de la forme du contour intérieur du cercle de monture.

A cet effet, en utilisant la valeur estimée de l'épaisseur e telle qu'obtenue précédemment, on place la pointe 22 à la hauteur $h_1$ - e/2, correspondant à la hauteur estimée du fond du drageoir, et dans une position radiale dégagée de la pince 5 (Figure 7). On déplace ensuite horizontalement la pointe 22 vers le fond du drageoir 31, jusqu'au contact avec ce dernier.

Après introduction de la pointe du palpeur 19 au fond du drageoir 31, la mesure du contour peut alors commencer avec la mise en rotation de la tourelle 15 et la détection des déplacements du palpeur 19, pendant que ce dernier suit le contour intérieur de la monture en fond de drageoir.

On conçoit que l'invention qui vient d'être décrite permet d'estimer de façon précise l'épaisseur de la monture, et ainsi de positionner correctement le palpeur en fond de drageoir, sans recourir à des moyens spécifiques de mesure de l'épaisseur. L'invention contribue par conséquent à une diminution du coût total de l'appareil.

**Revendications**

**1.** Dispositif d'acquisition de caractéristiques géométriques d'une monture de lunettes, comprenant une partie de référence fixe (3), un palpeur (19) de mesure d'un contour intérieur de la monture, mobile par rapport à la partie de référence (3), au moins une paire (5) d'organes (11, 12) de serrage de la monture, des moyens de mesure et d'enregistrement de la position d'un premier (11) des organes de serrage, et des moyens d'estimation de l'épaisseur ($\underline{e}$) de la monture, qui comprennent le palpeur (19) de mesure du contour, **caractérisé en ce qu'**il comporte des moyens pour déplacer le palpeur (19) dans une position de contact avec le deuxième organe de serrage (12), et des moyens d'enregistrement de la position de contact correspondante du palpeur, les moyens d'estimation étant adaptés pour estimer l'épaisseur ($\underline{e}$) de la monture (2) à partir desdites positions enregistrées.

**2.** Procédé d'acquisition de caractéristiques géométriques d'une monture de lunettes dans un dispositif comprenant une partie de référence fixe (3), un palpeur (19) de mesure d'un contour intérieur de la monture, mobile par rapport à la partie de référence (3), dans lequel on estime l'épaisseur ($\underline{e}$) de la monture (2) au moyen du palpeur (19) de mesure du contour, de la façon suivante :

- on mesure et on enregistre la position d'un premier (11) organe de serrage,
- après serrage des organes de serrage (11, 12) sur la monture, on réalise un cycle de déplacement du palpeur (19), au cours duquel on amène le palpeur en contact avec le deuxième (12) organe de serrage, et on enregistre la position de contact correspondante du palpeur (19), et
- on déduit des deux positions enregistrées, l'écartement des deux organes de serrage (11, 12) après serrage, et l'épaisseur ($\underline{e}$) de la monture (2).

**3.** Procédé suivant la revendication 2, le premier organe de serrage (11) étant un organe fixe, et le deuxième organe de serrage (12) étant un organe mobile, **caractérisé en ce qu'**on mesure et on enregistre la position du premier organe de serrage (11) au cours d'une étape d'étalonnage préalable au serrage de la monture (2).

**4.** Procédé suivant la revendication 3, le premier organe de serrage (11) étant un organe fixe supérieur (11) ayant une face interne de serrage (11A), et le deuxième organe de serrage (12) étant un organe mobile inférieur ayant une face interne de serrage (12A) et une face externe (12B) distante d'une épaisseur prédéterminée $e_0$, **caractérisé en ce que** la position pré-enregistrée du premier organe de serrage (11) est la hauteur $h_1$ de référence de la face interne (11A) de l'organe fixe (11), et la position de contact du palpeur (19) enregistrée ensuite est une position de contact sur la face externe (12B) de l'organe mobile (12), correspondant à une deuxième hauteur $h_2$, l'épaisseur $\underline{e}$ de la monture étant estimée par la relation :

$$e = h_1 - h_2 - e_0.$$

**5.** Procédé suivant la revendication 4, dans lequel on estime une hauteur de fond de drageoir (31), à partir de l'épaisseur $\underline{e}$ estimée de la monture, comme étant égale à

$$h_1 - \underline{e}/2.$$

**6.** Procédé suivant la revendication 4 ou 5, **caractérisé en ce que** le cycle de déplacement du palpeur (19) est réalisé à partir d'une position d'origine dégagée des organes de serrage (11, 12) et de la monture (2).

**7.** Procédé suivant l'une quelconque des revendications 2 à 6, **caractérisé en ce qu'**au cours du cycle de déplacement du palpeur, on amène le palpeur (19) en contact avec la monture (2) ou avec une partie du dispositif radialement solidaire des organes de serrage (11, 12) afin d'estimer et d'enregistrer la position radiale de la monture.

**Claims**

**1.** Device for acquiring geometric characteristics of an eyeglass frame, comprising a fixed reference part (3), a probe (19) for measuring an internal contour of the frame, which is displaceable relative to the reference part (3), at least one pair (5) of members (11, 12) for clamping the frame, means for measuring and recording the position of a first one (11) of the clamping members, and means for estimating the thickness (e) of the frame which incorporate the contour measuring probe (19), **characterised in that** it has means for displacing the probe (19) into a contact position with the second clamping member (12) and means for recording the corresponding contact position of the probe, the estimating means being configured to estimate the thickness ($\underline{e}$) of the frame (2) on the basis of said recorded positions.

2. Method of acquiring geometric characteristics of an eyeglass frame in a device comprising a fixed reference part (3), a probe (19) for measuring an internal contour of the frame, displaceable relative to the reference part (3), in which the thickness (e) of the frame (2) is estimated by means of the contour measuring probe (19) in the following manner:

   - the position of a first clamping member (11) is measured and recorded,
   - after closing the clamping members (11, 12) on the frame, a displacement cycle of the probe (19) is run, during which the probe is moved into contact with the second clamping member (12), and the corresponding contact position of the probe (19) is recorded, and
   - the distance between the two clamping members (11, 12) after closing and the thickness (e) of the frame (2) are deduced from the two recorded positions.

3. Method as claimed in claim 2, the first clamping member (11) being a fixed member and the second clamping member (12) being a displaceable member, **characterised in that** the position of the first clamping member (11) is measured and recorded during a calibration step prior to clamping the frame (2).

4. Method as claimed in claim 3, the first clamping member (11) being a top fixed member (11) with an internal clamping face (11A) and the second clamping member (12) being a bottom displaceable member with an internal clamping face (12A) and an external face (12B) spaced apart by a predetermined thickness $e_0$, **characterised in that** the pre-recorded position of the first clamping member (11) is the reference height $h_1$ of the internal face (11A) of the fixed member (11), and the contact position of the probe (19) then recorded is a contact position on the external face (12B) of the displaceable member (12) corresponding to a second height $h_2$, the thickness $\underline{e}$ of the frame being estimated by the equation:

$$e = h_1 - h_2 - e_0.$$

5. Method as claimed in claim 4, in which a groove (31) base height is estimated from the estimated thickness $\underline{e}$ of the frame as being equal to

$$h_1 - \underline{e}/2.$$

6. Method as claimed in claim 4 or 5, **characterised in that** the displacement cycle of the probe (19) is run starting from an original released position of the clamping members (11, 12) and frame (2).

7. Method as claimed in any one of claims 2 to 6, **characterised in that**, during the displacement cycle of the probe, the probe (19) is moved into contact with the frame (2) or with a part of the device radially integral with the clamping members (11, 12) in order to estimate and record the radial position of the frame.

**Patentansprüche**

1. Vorrichtung zum Erfassen von geometrischen Eigenschaften eines Brillengestells, aufweisend einen festen Referenzabschnitt (3), einen Fühler (19) zum Messen eines Innenumrisses des Gestells, der bezüglich des Referenzabschnitts (3) bewegbar ist, mindestens ein Paar (5) Mittel (11, 12) zum Einspannen des Gestells, Mittel zum Messen und zum Speichern der Position eines ersten (11) der Einspannmittel, und Mittel zum Schätzen der Dicke (e) des Gestells, die den Fühler (19) zum Messen des Umrisses aufweisen, **dadurch gekennzeichnet, dass** sie aufweist: Mittel zum Verlagern des Fühlers (19) in eine Kontaktposition mit dem zweiten Einspannmittel (12) und Mittel zum Speichern der korrespondierenden Kontaktposition des Fühlers, wobei die Schätzungsmittel angepasst sind, um die Dicke (e) des Gestells (2) ausgehend von den gespeicherten Positionen zu schätzen.

**2.** Verfahren zum Erfassen von geometrischen Eigenschaften eines Brillengestells in einer Vorrichtung, aufweisend einen festen Referenzabschnitt (3), einen Fühler (19) zum Messen eines Innenumrisses des Gestells, der bezüglich des Referenzabschnitts (3) bewegbar ist, wobei die Dicke (e) des Gestells (2) mittels des Fühlers (19) zum Messen des Umrisses auf die folgende Weise geschätzt wird:

● die Position eines ersten (11) Einspannmittels wird gemessen und gespeichert,
● nach dem Einspannen der Einspannmittel (11, 12) an dem Gestell wird ein Zyklus zum Verlagern des Fühlers (19) realisiert, während dessen der Fühler mit dem zweiten (12) Einspannmittel in Kontakt gebracht wird und die korrespondierende Kontaktposition des Fühlers (19) gespeichert wird, und
● aus den beiden gespeicherten Positionen werden der Abstand der beiden Einspannmittel (11, 12) nach dem Einspannen und die Dicke (e) des Gestells (2) abgeleitet.

**3.** Verfahren gemäß Anspruch 2, wobei das erste Einspannmittel (11) ein feststehendes Mittel ist und das zweite Einspannmittel (12) ein bewegbares Mittel ist, **dadurch gekennzeichnet, dass** die Position des ersten Einspannmittels (11) während eines Kalibrierungsschrittes vor dem Einspannen des Gestells (2) gemessen und gespeichert wird.

**4.** Verfahren gemäß Anspruch 3, wobei das erste Einspannmittel (11) ein oberes festes Mittel (11) ist, das eine Einspann-Innenfläche (11A) hat, und wobei das zweite Einspannmittel (12) ein unteres bewegbares Mittel ist, das eine Einspann-Innenfläche (12A) und eine Außenfläche (12B) hat, die um eine vorbestimmte Dicke $e_0$ entfernt ist, **dadurch gekennzeichnet, dass** die vorgespeicherte Position des ersten Einspannmittels (11) die Referenzhöhe $h_1$ der Innenfläche (11A) des festen Mittels (11) ist und die anschließend gespeicherte Kontaktposition des Fühlers (19) eine Kontaktposition an der Außenfläche (12B) des bewegbaren Mittels (12) ist, die mit einer zweiten Höhe $h_2$ korrespondiert, wobei die Dicke $\underline{e}$ des Gestells durch das Verhältnis

$$e = h1 - h2 - e_0$$

geschätzt wird.

**5.** Verfahren gemäß Anspruch 4, wobei eine Einkerbungsbodenhöhe (31) ausgehend von der geschätzten Dicke $\underline{e}$ des Gestells als gleich $h_1-\underline{e}/2$ geschätzt wird.

**6.** Verfahren gemäß Anspruch 4 oder 5, **dadurch gekennzeichnet, dass** der Zyklus zum Verlagern des Fühlers (19) ausgehend von einer freien Ausgangsposition der Einspannmittel (11, 12) und des Gestells (2) realisiert wird.

**7.** Verfahren gemäß irgendeinem der Ansprüche 2 bis 6, **dadurch gekennzeichnet, dass** der Fühler (19) während des Verlagerungszyklus des Fühlers mit dem Gestell (2) oder mit einem Abschnitt der Vorrichtung in Kontakt gebracht wird, der mit den Einspannmitteln (11, 12) radial einstückig ist, um die Radialposition des Gestells zu schätzen und zu speichern.

## FIG.1

**FIG.2**

**FIG.3**

FIG.4

FIG.5

FIG.6

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002046000 A